# DEMANDE DE BREVET EUROPEEN

(11) **EP 2 498 184 A1**
(43) Date de publication de la demande: **12.09.2012**
(21) Numéro de dépôt: 12158040.1
(22) Date de dépôt: 05.03.2012
(51) Int. Cl.: G06F 9/455, G06F 11/14, G06F 11/07

(54) **Dispositif pour l'amélioration de la tolérance aux fautes d'un processeur**

(30) Priorité: 08.03.2011 FR 1100688
(71) Demandeur: Thales, 92200 Neuilly Sur Seine (FR)
(72) Inventeur: Estaves, Guy, 81800 Rabastens (FR); Tourteau, Fabian, 31470 Fonsorbes (FR)
(74) Mandataire: Esselin, Sophie

(57) **Abrégé**

L'invention concerne un dispositif pour l'amélioration de la tolérance aux fautes d'un processeur (100) installé sur une carte mère, ladite carte mère comprenant des unités de mémoire (102, 103, 104) et une interface d'entrée et de sortie de données (105), ledit processeur (100) étant apte à exécuter au moins une application (201), ledit dispositif étant **caractérisé en ce qu'**il comporte :
- une couche logiciel, appelée à l'hyperviseur (202), centralisant des échanges entre ledit processeur (100) et ladite application (201) et mettant en oeuvre des mécanismes de gestion de tolérance aux fautes, et
- un composant électronique programmable (101) faisant interface entre ledit processeur (100) d'une part.

## Description

L'invention concerne l'utilisation de processeurs dans l'espace et plus particulièrement d'un dispositif pour l'amélioration de la tolérance aux fautes de processeurs utilisés dans de telles conditions.

L'utilisation d'un processeur dans l'espace nécessite de contrôler sa tolérance aux fautes et, en particulier, aux erreurs connues dans la littérature sous le nom de SEU (pour Single Event Upset) et de SEFI (pour Single Event Functional Interrupt).

Un événement de type SEU correspond à un changement d'état d'un bit (une information élémentaire) à l'intérieur du processeur provoqué par une particule par exemple un ion lourd.

Un événement de type SEFI correspond à un état de blocage du processeur. Cet événement peut être la conséquence directe d'un événement de type SEU ayant entrainé un changement de comportement du processeur.

On connaît déjà des processeurs adaptés à une utilisation dans un environnement spatial. Cependant ces processeurs offrent des capacités de calcul moins importantes que des processeurs du commerce et sont par ailleurs particulièrement coûteux.

L'invention vise à pallier les problèmes cités précédemment en proposant un dispositif pour l'amélioration de la tolérance aux fautes d'un processeur non prévu pour des applications spatiales, permettant de réduire les coûts liés à l'intégration d'un processeur dans un engin spatial tout en assurant une bonne tenue face aux événements de type SEU ou de type SEFI.

A cet effet, l'invention a pour objet un dispositif pour l'amélioration de la tolérance aux fautes d'un processeur installé sur une carte mère, ladite carte mère comprenant des unités de mémoire et une interface d'entrée et de sortie de données, ledit processeur étant apte à exécuter au moins une application, ledit dispositif étant **caractérisé en ce qu'**il comporte :
- une couche logiciel, appelée l'hyperviseur, centralisant des échanges entre ledit processeur et ladite application et mettant en ouvre des mécanismes de gestion de tolérance aux fautes, et
- un composant électronique programmable faisant interface entre ledit processeur d'une part, et les unités mémoires et l'interface d'entrée et de sortie d'autre part.

Avantageusement, l'un des mécanismes de tolérance aux fautes mis en oeuvre par l'hyperviseur est une fonction de remise à un état connu du processeur, ladite fonction étant appelée périodiquement selon une période paramétrable, la remise à un état connu du processeur étant déclenché par un signal de réinitialisation émis par le composant électronique programmable.

Avantageusement, le dispositif pour l'amélioration de la tolérance aux fautes comprend en outre, des moyens adaptés à la sauvegarde d'un contexte de calcul du processeur, et des moyens adaptés à la restauration du contexte de calcul sauvegardé, lesdits moyens étant utilisés conjointement pour sauvegarder un contexte avant une exécution de la fonction de remise à un état connu du processeur et pour restaurer ledit contexte après l'exécution de ladite fonction, les moyens adaptés à la sauvegarde contexte de calcul du processeur étant déclenchés à la réception par le processeur d'un signal de pré-initialisation émis à un délai prédéterminé avant l'émission du signal de réinitialisation.

Avantageusement, l'hyperviseur est apte à gérer l'exécution simultanée de plusieurs instances de ladite application.

Avantageusement, le dispositif pour l'amélioration de la tolérance aux fautes comprend en outre :
- des moyens adaptés à l'enregistrement des échanges entre chacune des instances de ladite application exécutée et dudit processeur, les moyens enregistrant des séquences d'appels de fonctions mises en oeuvre par l'hyperviseur,
- des moyens pour comparer lesdits échanges enregistrés correspondant aux différentes instances.

Selon une variante de l'invention, ledit processeur comprend un unique coeur de calcul.

Selon une autre variante de l'invention, ledit processeur comprend une pluralité de coeurs de calcul.

Avantageusement, chaque instance est exécutée sur un coeur de calcul différent.

Avantageusement, l'hyperviseur comprend en outre une fonction de temporisation permettant l'émission d'un signal de demande de temporisation vers un composant électronique programmable en réponse à la réception du signal de pré-réinitialisation ayant pour effet d'obtenir, un délai de temps supplémentaire au délai prédéterminé, avant la l'émission du signal de réinitialisation.

Avantageusement, le dispositif pour l'amélioration de la tolérance aux fautes comprend un mécanisme dit de chien de garde, l'hyperviseur envoyant à intervalle régulier un signal audit chien de garde pour lui signifier son bon fonctionnement, en l'absence d'un tel signal au terme d'un délai prédéfini, ledit chien de garde réinitialisant le processeur exécutant la partie logicielle de l'hyperviseur.

L'invention permet l'utilisation de processeurs du commerce, tels que des PowerPC ou des DSP (pour Digital Signal Processor), pour des applications spatiales. Bien que ces processeurs ne soient pas prévus pour de telles applications, l'invention permet de gérer les événements de types SEU ou SEFI.

La prise en charge de ces événements est entièrement réalisée par l'hyperviseur. Ceci permet de simplifier le développement des applications destinées à être exécutées sur le processeur qui n'ont pas besoin de mettre en oeuvre des mécanismes de tolérances aux fautes.

De plus l'hyperviseur est suffisamment générique pour être développé une seule fois et réutilisé sur différents projets.

L'invention sera mieux comprise et d'autres avantages apparaîtront à la lecture de la description détaillée faite à titre d'exemple non limitatif et à l'aide des figures parmi lesquelles :
La figure 1 représente un exemple de réalisation du dispositif selon l'invention à niveau matériel.
La figure 2 représente un exemple de réalisation du dispositif selon l'invention à niveau logiciel.

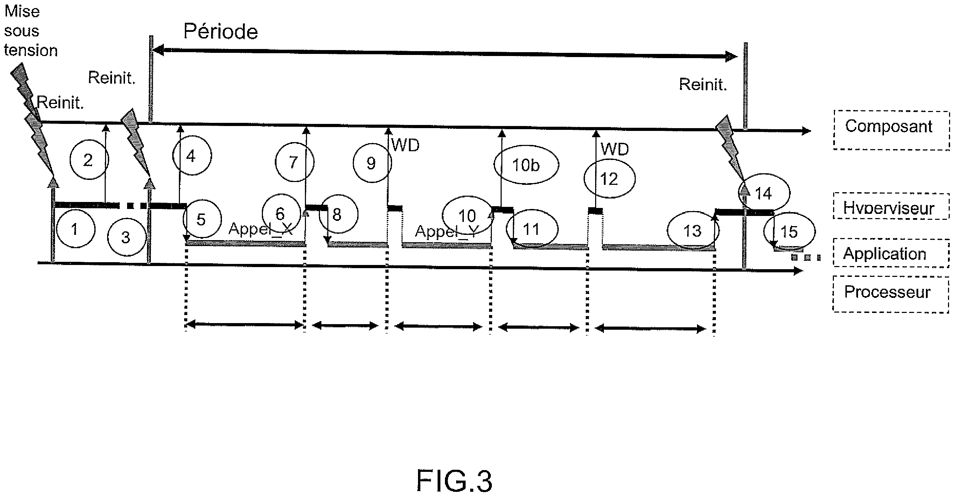

La figure 3 représente un exemple d'exécution d'une application sur processeur mettant en oeuvre le dispositif selon l'invention.

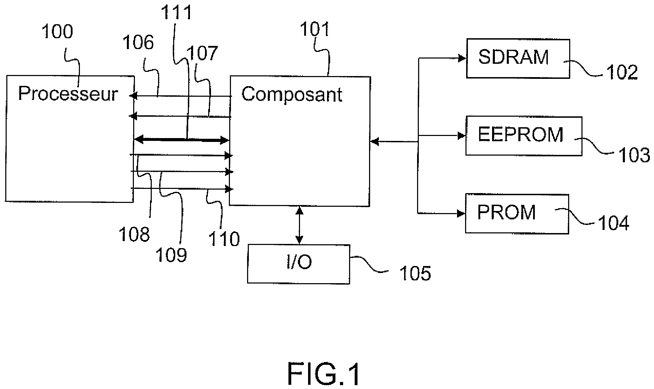

Un exemple de réalisation du dispositif selon l'invention est présenté à la figure 1.

Un processeur 100 est installé sur une carte mère sur laquelle sont installés :
- de la mémoire vive SDRAM 102 (Synchronous Dynamic Random Access Memory ou Mémoire Dynamique Synchrone à Accès Aléatoire,
- de la mémoire EEPROM 103 (pour Electrically-Erasable Programmable Read-Only Memory) c'est-à-dire une mémoire morte programmable et effaçable électriquement,
- une mémoire accessible uniquement en lecture 104 (mémoire dite PROM Programmable read-only memory),
- une interface d'entrée et de sortie de données 105, communiquant avec l'extérieur,
- un composant électronique programmable 101 faisant interface entre le processeur 100 d'une part, et les unités mémoires et l'interface d'entrée et de sortie d'autre part, dans l'exemple il s'agit d'un composant électronique de type FPGA ou ASIC développé dans une technologie prévue pour résister aux radiations (Radiation Tolerant).

Le processeur 100 peut être qualifié « classique », c'est-à-dire non spécialisé pour des applications spatiales.

La mémoire vive SDRAM 102 est protégée par un mécanisme de type EDAC (Error Détection and Correction) ou par redondance (généralement une triplication associée à un système de vote).

Le composant électronique programmable 101 comprend une unité de gestion de la mémoire (MMU pour Memory Management Unit) effectuant une segmentation de l'espace mémoire adressable (SRAM, SDRAM, PROM, EEPROM,...) La segmentation découpe la mémoire en segments identifiés par une adresse et qui permet d'isoler les différents programmes les uns des autres.

Le processeur 100 comprend :
- une mémoire cache de premier niveau (L1) comportant un mécanisme de protection basé sur des bits de parité,
- une mémoire de second niveau comportant aussi un mécanisme de protection soit basé sur des bits de parité soit basé sur un code d'erreur correcteur ou ECC (pour Error-correcting code),

Le processeur 100 peut disposer de fonctionnalités matérielles de virtualisation (comme le mode supplémentaire d'exécution superviseur au niveau processeur, la gestion de la mémoire virtuelle, la virtualisation des périphériques d'entrées/sorties). Si ce n'est pas le cas, la fonction de gestion de la mémoire (Block Protection Unit, Memory Management Unit ) peut être réalisée dans le composant électronique programmable 101 qui offre alors la possibilité de segmenter et protéger la mémoire adressée par le processeur 100.

Le processeur 100 et le composant électronique programmable 101 communiquent par le biais d'un bus de données 111 permettant notamment de transmettre les différents signaux 106, 107, 108, 109,110 décrits ci-après.

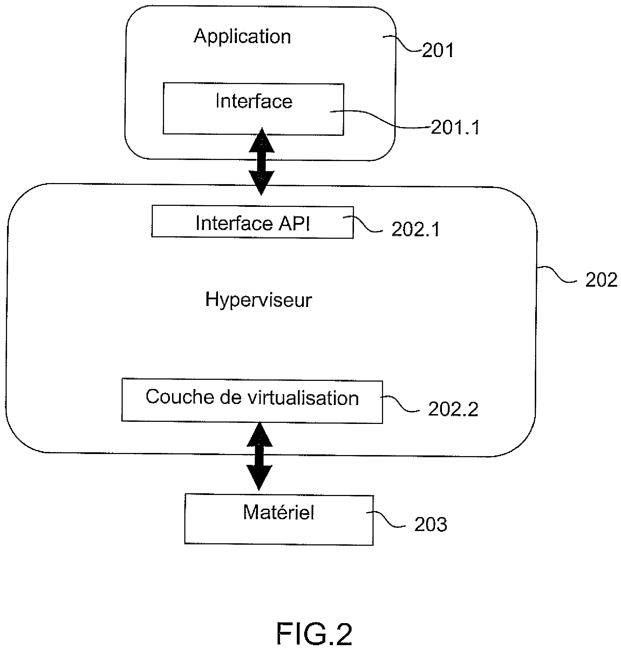

La figure 2 représente un exemple de réalisation du dispositif selon l'invention au niveau logiciel. Le dispositif comprend une couche logiciel, appelée hyperviseur 202 ou encore superviseur logiciel, centralisant des échanges entre les ressources matérielles 203 (le processeur 100, le composant électronique programmable 101, les mémoires, les périphériques d'entrée /sorties présents sur la carte processeur et l'application 201 et mettant en oeuvre des mécanismes de gestion de tolérance aux fautes.

Tous les échanges entre le processeur 100 et « le reste du monde » c'est-à-dire les autres composants électroniques 203 et l'application exécutée 201, passent par l'hyperviseur. En particulier, c'est l'hyperviseur qui gère les échanges de données (acquisition et production des données) avec l'extérieur (les données transitant par les entrées/sorties).

Du point de vue de l'application exécutée, l'hyperviseur virtualise les ressources matérielles (registres du processeur, mémoires et entrées/sorties). L'hyperviseur comporte une couche de virtualisation 202.2 prévue à cet effet. L'hyperviseur offre des fonctions d'interfaces (API) 202.1 permettant à l'application 201 d'accéder aux ressources matérielles (processeur, mémoires, ...).

L'hyperviseur gère les événements au niveau processeur et en particulier les interruptions.

L'hyperviseur est exécuté depuis une mémoire programmable accessible uniquement en lecture (mémoire dite PROM Programmable read-only memory) de façon à garantir que son code ne soit pas altéré.

L'hyperviseur 202 est exécuté sur le processeur 100.

L'hyperviseur gère les ressources du processeur telles que les bits de parité de la mémoire cache de premier niveau (L1) et les mécanismes de corrections d'erreur (ECC) de la mémoire cache de second niveau (L2). De cette manière l'hyperviseur délivre une information correcte à l'application en cours d'exécution dans le cas d'une erreur de parité ou d'une erreur simple EDAC (Single Edac Error) dûe à un SEU au niveau des mémoires cache. L'application exécutée n'a pas à gérer ce type d'erreur mais peut souscrire auprès de l'hyperviseur à un service permettant d'être informée de ce type d'erreurs.

Les stratégies de résolution d'erreurs (recovery strategy) sont mises en oeuvre au niveau de l'hyperviseur.

L'hyperviseur est activé par: des appels de son API par l'application en cours d'exécution ou des événements asynchrones provenant du matériel tels qu'une interruption (par exemple générée par un timer ou des périphériques d'entrées/sorties).

L'hyperviseur comprend un mécanisme de type chien de garde (aussi appelé watchdog) pour contrôler son propre fonctionnement.

L'hyperviseur envoi à intervalle régulier un signal au chien de garde pour lui signifier son bon fonctionnement. Ce signal est représenté par le signal 109 sur la figure 1 entre le processeur 100 et le composant électronique programmable 101. En l'absence d'un tel signal au terme d'un délai prédéfini, le chien de garde réinitialise le processeur 100 exécutant la partie logicielle de l'hyperviseur 202. Ce mécanisme permet de remédier à un blocage matériel et/ou logiciel.

Selon une caractéristique de l'invention, le dispositif pour l'amélioration de la tolérance aux fautes d'un processeur comprend un mécanisme pour la remise à un état connu du processeur aussi appelé réinitialisation.

Ce mécanisme permet d'attribuer à tous les éléments du processeur pouvant changer d'état (des mémoires internes, des bascules, des registres) une valeur ou un état prédéterminé.

Ce mécanisme est déclenché régulièrement. Il permet d'éviter des états incohérents dans le processeur comme un registre qui change de valeur alors qu'il ne devrait pas. Ce changement de valeur étant provoqué, par exemple, par la réception d'un ion lourd venant frapper ce registre.

Afin de rendre le mécanisme transparent pour les applications exécutées sur le processeur, le dispositif comprend un registre permettant d'indiquer l'origine de la remise à un état connu du processeur et une fonction de sauvegarde et de restauration du contexte du processeur. Cette fonction permet de recopier dans une mémoire fiable, les valeurs de tous les registres accessibles du processeur (constituants son contexte sauvegardé) afin de les sauvegarder, et ensuite de les recopier dans l'autre sens, c'est à dire de cette mémoire fiable vers les registres correspondant du processeur, afin de restaurer les valeurs préalablement sauvées (restauration du contexte).

En effet la remise à un état connu du processeur peut être déclenchée pour d'autres raisons, par exemple, :
- par le mécanisme de type chien de garde (watchdog),
- ou à cause d'une erreur, déclenchée lors de l'exécution de l'application 201, cette erreur pouvant être par exemple, un accès mémoire incorrect, une tentative d'écriture dans une zone protégée en écriture, une tentative d'accès en lecture à une zone protégée contre la lecture pour l'application 201, etc....

En pratique la mise en oeuvre d'une réinitialisation peut se faire de la façon suivante :
1. l'émission d'un premier signal 106 par le composant 101 indiquant à l'hyperviseur qu'une réinitialisation va être effectuée ;
2. la sauvegarde de contexte du processeur par l'hyperviseur ;
3. l'écriture dans le registre que la réinitialisation est une réinitialisation périodique ;
4. l'émission d'un second signal 107 déclenchant l'exécution de la fonction de réinitialisation ;
5. la lecture du registre par l'hyperviseur pour déterminer l'origine de la réinitialisation ;
6. la restauration du contexte du processeur par l'hyperviseur.

L'hyperviseur est aussi activé lors du déclenchement de ce mécanisme de réinitialisation.

Le mécanisme de réinitialisation est programmable par l'hyperviseur. Sa fréquence d'activation est paramétrée en fonction de la mission envisagée pour l'engin spatial. Elle peut aller, par exemple, de une milliseconde à plusieurs minutes.

Selon une caractéristique de l'invention, l'hyperviseur comprend des moyens pour exécuter en parallèle plusieurs instances d'une application. L'exécution par exemple de deux ou trois instances d'une même application permet d'améliorer la tolérance aux fautes, notamment en comparant les résultats d'exécution des différentes instances. Dans le cas où seulement deux instances sont exécutées si les résultats des deux instances divergent alors l'hyperviseur détecte une incohérence. Dans le cas où trois instances sont exécutées si les résultats de deux instances diffèrent, le résultat de la troisième permet de déterminer le résultat attendu. La comparaison des trois instances est généralement réalisée par un mécanisme de vote.

Selon un mode de réalisation préféré, lorsque plusieurs instances d'une même application sont exécutées en parallèle, le dispositif pour l'amélioration de la tolérance aux fautes d'un processeur comprend aussi :
- des moyens adaptés à l'enregistrement des échanges entre chacune des instances de l'application exécutée et le processeur, les moyens enregistrant des séquences d'appels de fonctions mises en oeuvre par l'hyperviseur,
- des moyens pour comparer les échanges enregistrés correspondant aux différentes instances.

L'hyperviseur contrôle ainsi régulièrement la progression de chaque instance au travers des informations enregistrées pour chacune d'elles. Dans une configuration à trois instances, lorsque les informations enregistrées d'une partition diffèrent des deux autres, l'hyperviseur peut décider d'arrêter la partition qui se comporte différemment et de relancer son exécution à partir d'un contexte valide déterminé à partir des deux autres instances. Dans une configuration à deux instances, l'hyperviseur ne pourra que détecter une incohérence, et décider de relancer l'exécution deux partitions à partir d'un point de sauvegarde de contexte précédent valide ( retour en arrière, roll back)

Ces moyens permettent de vérifier la cohérence de l'exécution des instances sans attendre le résultat à la fin de son exécution.

Avantageusement, les moyens adaptés à l'enregistrement des échanges entre chacune des instances de l'application exécutée et le processeur sont paramétrables. Ce paramétrage comprend la taille d'une séquence d'appel de fonction, en d'autres termes, un des paramètres correspond au nombre d'appels à des fonctions de l'hyperviseur consécutifs enregistrés.

Le scénario présenté à titre d'exemple comporte les étapes suivantes :
1. le scénario débute par la mise sous tension du dispositif de calcul (processeur et carte mère) ; la mise sous tension implique une réinitialisation (Réinit.) du processeur,
2. la mise sous tension (1) est suivie d'une étape de configuration de la mémoire programmable (en particulier des périodes de génération des signaux de réinitialisation (signal 107 sur la figure 1) et de pré-réinitialisation (signal 106 sur la figure 1) et du chien de garde matériel) ;
3. le processeur est soumis à une première réinitialisation périodique ;
4. après la réinitialisation, l'hyperviseur effectue une lecture de contexte auprès de la mémoire programmable ;
5. le contexte est récupéré depuis la mémoire programmable est transmis au processeur pour que celui soit restauré ; et l'exécution d'une application 201 soit démarrée ;
6. Une application est exécutée sur le processeur, cette application effectue un premier appel d'un service X (Appel_X) de l'hyperviseur,
7. L'hyperviseur réalise l'action correspondante au service X demandé, exécute des contrôles de bonne santé et de cohérence notamment de l'application appelante, enregistre l'appel à l'aide des moyens adaptés à l'enregistrement des échanges et sauvegarde le contexte processeur
8. L'hyperviseur rend alors la main à l'application appelante avec les service X rendu tel que demandé ;
9. L'hyperviseur envoi un signal au chien de garde (situé en mémoire programmable) pour lui signifier son bon fonctionnement ;
10. L'application exécutée sur le processeur effectue un appel à un service Y (Appel_Y) de l'hyperviseur.
   10bis. L'hyperviseur réalise l'action correspondante au service Y demandé, exécute des contrôles de bonne santé et de cohérence notamment de l'application appelante, enregistre l'appel à l'aide des moyens adaptés à l'enregistrement des échanges, sauvegarde le contexte processeur, envoie aussi un signal (signal 109 sur la figure 1) au chien de garde pour lui signifier son bon fonctionnement ;.
11. L'hyperviseur rend alors la main à l'application appelante avec le service Y rendu tel que demandé ;
12. L'hyperviseur envoi un signal (signal 109 sur la figure 1) au chien de garde (situé en mémoire programmable) pour lui signifier son bon fonctionnement ;
13. L'exécution de l'application est suspendue et le contexte de calcul du processeur est sauvegardé ; ces opérations sont réalisées en prévision de la prochaine réinitialisation périodique, à la réception du signal de pré-réinitialisation (signal 106 sur la figure 1) venant du composant électronique programmable 101 .L'hyperviseur garde alors la main jusqu'à la réception du signal réinitialisation (signal 107 sur la figure 1) provoquant la remise dans un état connu du processeur 100.
14. le processeur est soumis à une deuxième réinitialisation périodique ; comme cela a été expliqué précédemment la période est paramétrable, elle peut être comprise par exemple entre 1 milliseconde et 10 secondes ;
15. le contexte sauvegardé à l'étape 13 est récupéré par l'hyperviseur ;
16. ce contexte est transmis au processeur pour y être restauré ; l'exécution de l'application reprend alors son cours.

Par exemple, si le processeur se bloque pendant le premier appel (Appel_X) à l'hyperviseur alors l'exécution de l'application est bloquée jusqu'à la deuxième réinitialisation périodique. Après cette réinitialisation, le dernier contexte sauvegardé valide (avant la première réinitialisation, ou durant le cycle) est restauré et l'exécution de l'application se poursuit.

Les deux variantes de réalisation décrites ci-après sont appliquées dans le cas où l'hyperviseur exécute plusieurs instances d'une même application.

Selon une variante de réalisation de l'invention, le processeur comprend un unique coeur de calcul, les instances de l'application sont exécutées en parallèle sur ledit coeur de calcul.

En pratique une première instance est exécutée durant un laps de temps de donné, son contexte sauvegardé. L'exécution de l'instance est suspendue pour qu'une autre instance soit exécutée à son tour pour un laps de temps donné. Le contexte d'exécution de cette instance est aussi sauvegardée. Lorsque toutes les autres instances ont toutes été exécutées une fois, le contexte de la première instance est restauré et celle-ci poursuit son exécution comme précédemment. Ainsi toutes les instances sont exécutées à tour de rôle.

Ce mode de réalisation a pour avantage de mettre en oeuvre un processeur peu coûteux.

Selon une autre variante de réalisation, le processeur comporte une pluralité de coeurs de calcul, chacune des instances de l'application est exécutée sur un coeur de calcul différent.

Ce mode de réalisation permet une exécution plus rapide des instances que dans le mode de réalisation comportant un seul coeur de calcul.

Une autre variante de réalisation consiste à utiliser un signal complémentaire de demande de temporisation 108 (sur la figure 1) permettant à l'hyperviseur, à la réception du signal de pré-réinitialisation 106 de demander au composant électronique programmable 101, un délai de temps supplémentaire au délai programmé par défaut dans le composant électronique programmable 101, avant la réception effective du signal de réinitialisation 107. Ce mode de réalisation permet à l'hyperviseur de disposer d'un peu plus de temps nécessaire lorsqu'il exécute des opérations critiques non interruptibles avant de pouvoir se préparer à la réception du signal 107.

Une autre variante de réalisation consiste à utiliser un signal complémentaire d'activation du mécanisme de réinitialisation 110 du composant électronique programmable 101. Ce mode de réalisation permet de laisser le temps quand nécessaire à une carte processeur pour démarrer avant que l'hyperviseur puisse gérer correctement le mécanisme de réinitialisation du composant électronique programmable 101. Selon un mode de réalisation préféré, lorsque ce signal 110 sera utilisé, il ne pourra pas être utilisé pour désactiver mécanisme de réinitialisation du composant électronique programmable 101.

## Revendications

1. Dispositif pour l'amélioration de la tolérance aux fautes d'un processeur (100) installé sur une carte mère, ladite carte mère comprenant des unités de mémoire (102, 103, 104) et une interface d'entrée et de sortie de données (105), ledit processeur (100) étant apte à exécuter au moins une application (201), ledit dispositif comprenant :
- une couche logiciel, appelée hyperviseur (202), centralisant des échanges entre ledit processeur (100) et ladite application (201) et mettant en oeuvre des mécanismes de gestion de tolérance aux fautes, et
- un composant électronique programmable (101) faisant interface entre ledit processeur (100) d'une part, et les unités mémoires (102, 103, 104) et l'interface d'entrée et de sortie (105) d'autre part ;
ledit dispositif étant **caractérisé en ce que** l'un des mécanismes de tolérance aux fautes mis en oeuvre par l'hyperviseur (202) est une fonction de remise à un état connu du processeur (100), ladite fonction étant appelée périodiquement selon une période paramétrable, la remise à un état connu du processeur (100) étant déclenchée par un signal de réinitialisation (107) émis par le composant électronique programmable (101).

2. Dispositif pour l'amélioration de la tolérance aux fautes selon la revendication 1, comprenant, en outre, des moyens adaptés à la sauvegarde d'un contexte de calcul du processeur (100), et des moyens adaptés à la restauration du contexte de calcul sauvegardé, lesdits moyens étant utilisés conjointement pour sauvegarder un contexte avant une exécution de la fonction de remise à un état connu du processeur (100) et pour restaurer ledit contexte après l'exécution de ladite fonction, les moyens adaptés à la sauvegarde contexte de calcul du processeur (100) étant déclenchés à la réception par le processeur (100) d'un signal de pré-initialisation (106) émis à un délai prédéterminé avant l'émission du signal de réinitialisation (107).

3. Dispositif pour l'amélioration de la tolérance aux fautes selon l'une des revendications 1 ou 2, dans lequel l'hyperviseur (202) est apte à gérer l'exécution simultanée de plusieurs instances de ladite application (201).

4. Dispositif pour l'amélioration de la tolérance aux fautes selon la revendication 3, comportant en outre :
- des moyens adaptés à l'enregistrement des échanges entre chacune des instances de ladite application (201) exécutée et dudit processeur (100), les moyens enregistrant des séquences d'appels de fonctions mises en oeuvre par l'hyperviseur (202),
- des moyens pour comparer lesdits échanges enregistrés correspondant aux différentes instances.

5. Dispositif pour l'amélioration de la tolérance aux fautes selon l'une des revendications précédentes, dans lequel ledit processeur (100) comprend un unique coeur de calcul.

6. Dispositif pour l'amélioration de la tolérance aux fautes selon l'une des revendications 1 à 5, dans lequel ledit processeur (100) comprend une pluralité de coeurs de calcul.

7. Dispositif pour l'amélioration de la tolérance aux fautes selon les revendications 3 et 6 prises en combinaison, dans lequel chaque instance est exécutée sur un coeur de calcul différent.

8. Dispositif pour l'amélioration de la tolérance aux fautes selon l'une des revendications 2 à 7 dans lequel l'hyperviseur (202) comprend en outre une fonction de temporisation permettant l'émission d'un signal de demande de temporisation (108) vers un composant électronique programmable (101) en réponse à la réception du signal de pré-réinitialisation (106) ayant pour effet d'obtenir, un délai de temps supplémentaire au délai prédéterminé, avant la l'émission du signal de réinitialisation (107).

9. Dispositif pour l'amélioration de la tolérance aux fautes selon l'une des revendications précédentes, **caractérisé en ce qu'**il comprend un mécanisme dit de chien de garde, l'hyperviseur (202) envoyant à intervalle régulier un signal (109) audit chien de garde pour lui signifier son bon fonctionnement, en l'absence d'un tel signal au terme d'un délai prédéfini, ledit chien de garde réinitialisant le processeur (100) exécutant la partie logicielle de l'hyperviseur (202).
